# FASCICULE DE BREVET EUROPEEN

(11) **EP 3 000 319 B1**
(45) Date de publication et mention de la délivrance du brevet: **12.07.2017**
(21) Numéro de dépôt: 15185661.4
(22) Date de dépôt: 17.09.2015
(51) Int. Cl.: A01M 7/00, B08B 9/08, B08B 9/20, B67D 7/02, B08B 9/093

(54) **DISPOSITIF POUR LE TRANSFERT D'UN LIQUIDE DEPUIS UN BIDON JUSQU À UNE CUVE DE FAÇON ÉTANCHE**
VORRICHTUNG ZUM DICHTEN UMFÜLLEN EINER FLÜSSIGKEIT AUS EINEM KANISTER IN EINEN BEHÄLTER
DEVICE FOR TRANSFERRING A LIQUID FROM A CONTAINER TO A VESSEL IN A SEALED MANNER

(30) Priorité: 26.09.2014 FR 1458642
(43) Date de publication de la demande: 30.03.2016
(73) Titulaire: Exel Industries, 75009 Paris (FR)
(72) Inventeur: CHAPRON, Fabien, 69220 Cercié (FR)
(74) Mandataire: Chevalier, Renaud Philippe

(56) Documents cités:
- WO-A1-92/08548
- GB-A- 2 247 451
- US-A- 4 741 368
- US-A- 5 996 600

## Description

L'invention concerne un dispositif pour transférer un liquide, comme un produit dangereux pour un opérateur, depuis un bidon jusqu'à une cuve de façon étanche.

Le dispositif permet notamment de remplir une cuve d'un pulvérisateur agricole avec un produit phytosanitaire contenu dans un bidon.

Le remplissage de la cuve est parfois réalisé par l'opérateur de façon manuelle, l'opérateur dévissant le bouchon du bidon de produit phytosanitaire, perce l'opercule scellé sur le goulot du bidon si besoin, verse manuellement le contenu du bidon dans la cuve puis nettoie le bidon vide.

Pour rincer le bidon, l'opérateur introduit de l'eau dans le bidon, revisse le bouchon, secoue le bidon, en répétant ces opérations autant de fois que nécessaire.

Toutefois, dans la majorité des cas, l'opérateur utilise une buse de rinçage qui équipe le pulvérisateur, pour rincer le bidon.

Ces actions présentent des risques de contact entre le produit polluant contenu dans le bidon et l'opérateur, notamment par renversement inopiné du bidon ouvert, ou par éclaboussure lors du versement du bidon dans la cuve ou lors du rinçage du bidon.

De plus, il existe aussi un risque d'inhalation des vapeurs du produit.

Pour limiter ces risques, il est connu d'utiliser un dispositif de remplissage étanche tel que le dispositif décrit dans le document WO92/08548.

Ce type de dispositif comporte un embout de puisage qui s'étend axialement suivant un axe de puisage depuis une première extrémité, jusqu'à une seconde extrémité équipée d'un manchon.

Le manchon est conçu pour être raccordé sur un type de goulot de bidon.

Aussi, le dispositif de remplissage comporte un tuyau de puisage qui présente une première extrémité reliée sur l'embout de puisage et une seconde extrémité adaptée pour être reliée sur la cuve afin de permettre le puisage du liquide depuis le bidon jusqu'à la cuve, et un tuyau de rinçage qui présente une première extrémité reliée sur l'embout de puisage et une seconde extrémité reliée sur une source d'eau, pour rincer et nettoyer le bidon.

Pour favoriser l'aspiration du produit contenu dans le bidon, l'embout de puisage est équipé d'un clapet d'évent qui coopère avec un orifice.

Bien que ce type de dispositif de remplissage permette de limiter les risques de contact avec le produit contenu dans le bidon, il présente plusieurs inconvénients.

En effet, ce type de dispositif n'est compatible qu'avec un type de goulot de bidon, c'est-à-dire un goulot d'un diamètre déterminé.

De plus, rien n'est prévu pour limiter les risques de contact avec le produit contenu dans le bidon lors du perçage de l'opercule de fermeture du bidon.

Aussi, il apparait que le clapet d'évent engendre parfois des fuites du produit contenu dans le bidon ou de vapeurs de ce produit.

En outre, le rinçage du bidon est généralement grossier, le jet d'eau injecté dans le bidon par le tuyau de rinçage ne permettant pas de rincer et nettoyer efficacement le bidon, l'opérateur devant alors secouer le bidon pour décoller le produit des parois du bidon.

De même, lors du désacouplement de l'embout de puisage sur le bidon, des gouttes risquent de ruisseler le long de l'embout de puisage.

La présente invention vise notamment à résoudre cet inconvénient et se rapporte pour ce faire à un dispositif pour transférer un liquide depuis un bidon jusqu'à une cuve de façon étanche, le dispositif comportant :
- un embout de puisage de forme globalement cylindrique qui s'étend axialement suivant un axe de puisage depuis une première extrémité, jusqu'à une seconde extrémité équipée d'au moins un manchon principal, ledit manchon étant conçu pour être raccordé sur le goulot du bidon de façon étanche,
- un tuyau de puisage qui présente une première extrémité reliée sur l'embout de puisage et une seconde extrémité adaptée pour être reliée sur la cuve afin de permettre le puisage d'un liquide depuis le bidon jusqu'à la cuve, et
- un tuyau de rinçage qui présente une première extrémité reliée sur l'embout de puisage et une seconde extrémité adaptée pour être reliée sur une source d'un fluide de rinçage, pour injecter ledit fluide de rinçage dans le bidon, caractérisé en ce que l'embout de puisage comporte une lance de rinçage qui est reliée sur la première extrémité du tuyau de rinçage et qui est montée coulissante axialement suivant l'axe de puisage, entre une position de repos dans laquelle la lance de rinçage est escamotée dans l'embout de puisage et une position de rinçage dans laquelle la lance de rinçage est déployée pour rincer les parois internes du bidon.

Ainsi, l'invention permet de nettoyer et rincer efficacement les parois internes du bidon contenant le produit, notamment lorsque le produit est du type visqueux.

De plus, la lance de rinçage est montée libre en rotation autour de l'axe de puisage pour rincer les parois internes latérales du bidon.

Pour récupérer les gouttes de ruissellement provenant de l'embout de puisage, le manchon principal présente une extrémité libre équipée d'une gouttière anti-goutte annulaire qui s'étend autour de l'axe de puisage.

De façon complémentaire, le dispositif comporte un bouchon de rinçage qui est adapté pour être monté sur le manchon principal de façon étanche pour permettre le rinçage de l'embout de puisage.

Selon un exemple de réalisation préféré, le dispositif comprend un moyen d'aspiration qui coopère avec le tuyau de puisage pour permettre le puisage du liquide depuis le bidon jusqu'à la cuve.

Aussi, la lance de rinçage est adaptée pour injecter de l'air directement à l'intérieur du bidon, au-delà du goulot du bidon.

Cette caractéristique permet de favoriser l'écoulement du produit à travers le goulot, en complément ou non de l'aspiration du produit.

De plus, l'embout de puisage comporte un clapet anti-retour formant évent.

Ce clapet anti-retour permet l'aspiration de l'air contenu dans le bidon et permet également la compression du bidon un fois vidé.

Selon un autre aspect, l'embout de puisage est équipé d'un perforateur principal qui présente une forme globalement cylindrique suivant l'axe de puisage et qui est adapté pour percer un opercule obturant le goulot du bidon.

Ainsi, l'invention permet de puiser le liquide contenu dans le bidon sans risque de contact avec le liquide au moment du perçage de l'opercule de scellement du bidon.

Selon une autre caractéristique, le perforateur principal présente une extrémité libre perforante, ledit perforateur étant monté coulissant axialement suivant l'axe de puisage, entre une position escamotée et une position de perçage dans laquelle ladite extrémité libre perforante permet le perçage de l'opercule dudit goulot.

Selon un exemple de réalisation préféré, le dispositif comporte au moins un manchon secondaire qui est conçu pour être monté sur l'embout de puisage et pour être raccordé sur le goulot d'un bidon secondaire de façon étanche.

Ainsi, le dispositif peut être adapté à différents types de bidons.

De plus, le manchon secondaire est associé à un perforateur secondaire qui présente une forme globalement cylindrique suivant l'axe de puisage et qui est adapté pour être monté sur le perforateur principal.

Selon une autre caractéristique, le dispositif comporte une canne de puisage qui s'étend axialement suivant l'axe de puisage à travers un trou de passage délimité par l'embout de puisage, depuis une première extrémité reliée sur le tuyau de puisage, jusqu'à une seconde extrémité libre de puisage, la canne de puisage étant montée coulissante axialement suivant l'axe de puisage par rapport à l'embout de puisage entre une position escamotée et une position de puisage dans laquelle l'extrémité libre de la canne de puisage est déployée pour aspirer le liquide dans le bidon.

Cette caractéristique permet de puiser le liquide contenu dans le bidon sans avoir à retourner le bidon.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique de face qui illustre un dispositif de remplissage selon l'invention relié à une cuve d'un pulvérisateur et à un bidon,
- la figure 2 est une vue schématique similaire à celle de la figure 1 qui illustre le manchon principal vissé sur le goulot du bidon à vider ;
- la figure 3 est une vue schématique similaire à celle de la figure 1 qui illustre le perforateur 42 dans sa position de perçage de l'opercule du bidon ;
- la figure 4 est une vue schématique similaire à celle de la figure 1 qui illustre la lance de rinçage dans sa position de rinçage du bidon ;
- la figure 5 est une vue schématique de détail qui illustre un manchon secondaire et un perforateur secondaire selon un exemple de réalisation de l'invention ;
- la figure 6 est une vue schématique similaire à celle de la figure 1 qui illustre la lance de rinçage dans une position d'injection d'air dans le bidon, selon une variante de réalisation de l'invention ;
- la figure 7 est une vue schématique de détail qui illustre un manchon principal à fixation rapide du type quart de tour, selon une variante de réalisation ;
- la figure 8 est une vue schématique de détail qui illustre un manchon principal à fixation rapide du type quart de tour, selon une autre variante de réalisation ;
- la figure 9 est une vue schématique similaire à celle de la figure 1 qui illustre la canne de puisage dans sa position escamotée ;
- la figure 10 est une vue schématique similaire à celle de la figure 1 qui illustre la canne de puisage dans sa position de puisage et la lance de rinçage dans sa position de rinçage ;
- la figure 11 est une vue schématique similaire à celle de la figure 1 qui illustre la canne de puisage dans sa position de puisage et la lance de rinçage dans sa position de repos.

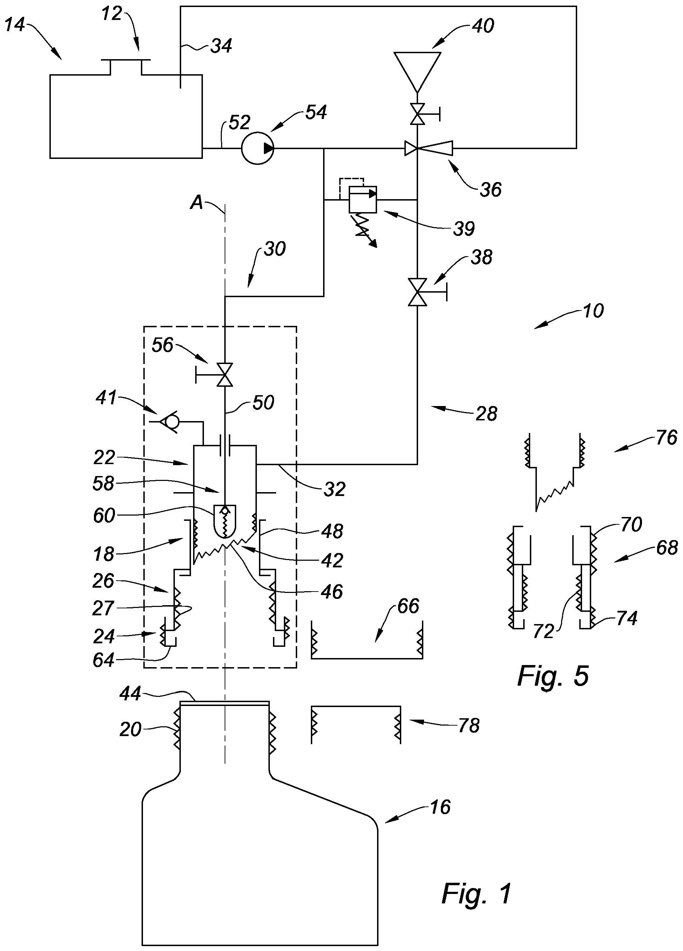

Dans la description et les revendications, on utilisera à titre non limitatif les expressions « supérieur », « inférieur » et « bas », « haut » en référence à la partie supérieure et à la partie inférieure respectivement des figures 1 à 11.

On a représenté à la figure 1 un dispositif 10 pour le remplissage d'une cuve 12 d'un pulvérisateur 14 du type pulvérisateur agricole, depuis un bidon 16 contenant un produit liquide, un produit phytosanitaire par exemple.

Le dispositif 10 comporte un embout 18 de puisage de forme globalement cylindrique qui est complémentaire à la forme du goulot 20 à visse du bidon 16 et qui s'étend axialement suivant un axe A de puisage, depuis une première extrémité 22 supérieure, jusqu'à une seconde extrémité 24 inférieure.

La seconde extrémité 24 inférieure de l'embout 18 de puisage est équipée d'un manchon principal 26 qui est conçu pour être raccordé sur le goulot 20 du bidon 16 de façon étanche.

A cet effet, le manchon principal 26 présente une forme globalement cylindrique qui s'étend axialement suivant l'axe A de puisage et qui est munie d'un taraudage 27 pour former un écrou adapté pour être vissé sur le goulot 20 du bidon 16.

Le diamètre du manchon principal 26 taraudé est de préférence de 63 millimètres pour s'adapter au diamètre du goulot des bidons les plus courants.

De plus, le dispositif 10 comporte un tuyau de puisage 28 et un tuyau de rinçage 30.

Le tuyau de puisage 28 présente une première extrémité 32 qui est reliée sur l'embout 18 de puisage et une seconde extrémité 34 qui est adaptée pour être reliée sur la cuve 12, afin de permettre le puisage du liquide depuis le bidon 16, jusqu'à la cuve 12.

Dans ce but, un moyen d'aspiration 36 du type Venturi est piqué sur le tuyau de puisage 28, pour créer une dépression d'aspiration dans le tuyau de puisage 28.

Avantageusement, une première vanne 38 coopère avec le tuyau de puisage 28 pour permettre le réglage, ou l'arrêt, du débit d'aspiration à travers le tuyau de puisage 28.

La première vanne 38 peut être pilotée à la main ou au pied pour favoriser l'ergonomie.

A titre non limitatif, il est également possible de régler le débit d'aspiration à travers le tuyau de puisage 28 au moyen d'un limiteur de pression 39 qui court-circuite le moyen d'aspiration 36.

On a également représenté à la figure 1 une trémie 40 d'incorporation qui est agencée au voisinage du moyen d'aspiration 36 et qui permet de remplir directement la cuve 12.

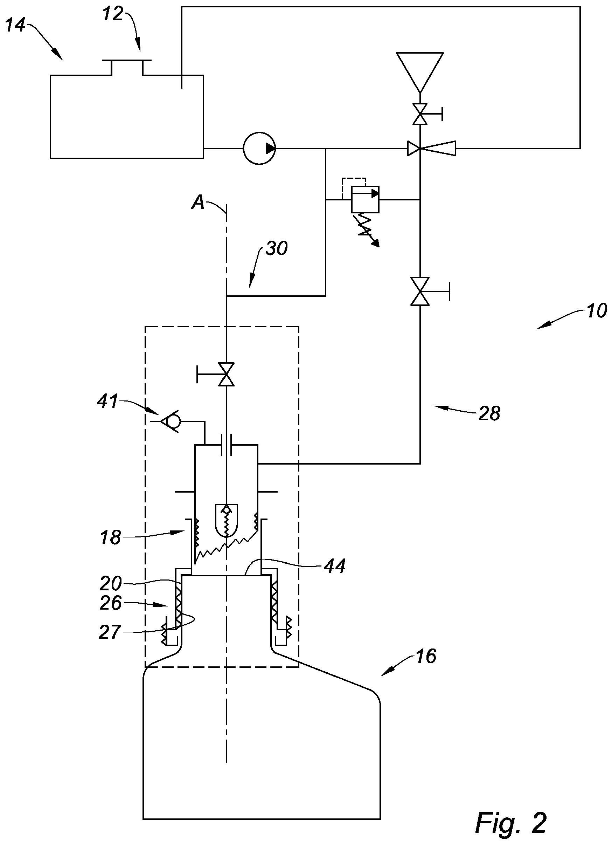

De plus, l'embout 18 de puisage est équipé d'un clapet anti-retour 41 formant évent qui permet l'aspiration de l'air contenu dans le bidon 16 lorsque le manchon principal 26 est vissé sur le bidon 16, comme on peut le voir à la figure 2.

Selon un autre aspect de l'invention, l'embout 18 de puisage est équipé d'un perforateur principal 42 qui présente une forme d'une douille globalement cylindrique suivant l'axe A de puisage et qui est adapté pour percer un opercule 44 obturant le goulot 20 du bidon 16.

Dans ce but, le perforateur principal 42 présente une extrémité libre 46 perforante, par exemple une extrémité pointue coupée de biais.

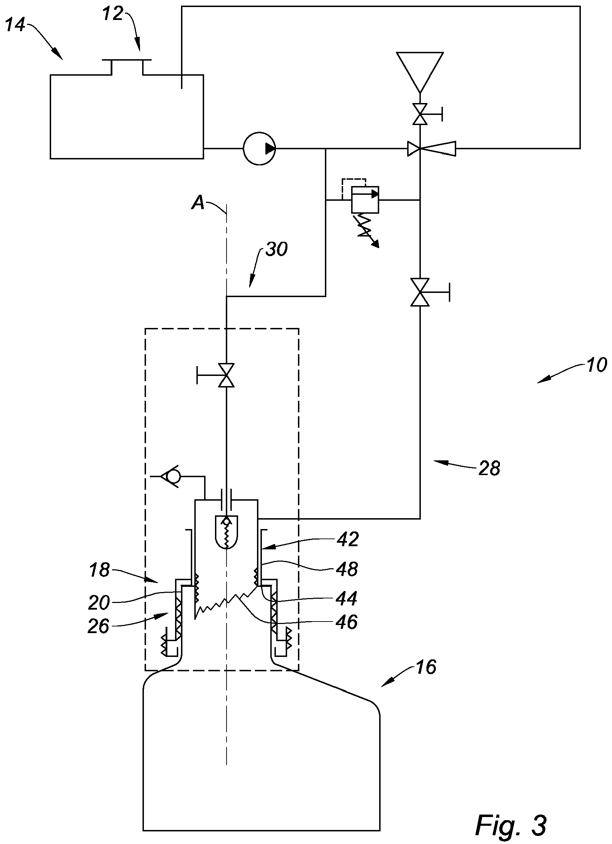

Le perforateur principal 42 est monté libre en translation axiale, suivant l'axe A de puisage, dans un fourreau 48 complémentaire formé par l'embout principal 26, de façon étanche, de sorte que le perforateur principal 42 est monté coulissant entre une position escamotée, représentée à la figure 1, et une position de perçage, représentée à la figure 3, dans laquelle l'extrémité libre 46 perforante permet le perçage de l'opercule 44 du goulot 20.

Avantageusement, le perforateur principal 42 est associé à des moyens de rappel élastique (non représentés) pour rappeler le perforateur principal 42 vers sa position escamotée.

Le dispositif 10 selon l'invention est également conçu pour permettre le rinçage du bidon 16 une fois vidé.

Dans ce but, le tuyau de rinçage 30 présente une première extrémité 50 qui est reliée sur l'embout 18 de puisage et une seconde extrémité 52 qui est reliée sur une réserve d'eau (non représentée), par exemple une réserve portée par le pulvérisateur 14, pour injecter de l'eau dans le bidon 16.

A cet effet, le dispositif 10 comporte une pompe 54 d'injection qui permet la circulation d'eau à travers le tuyau de rinçage 30.

La pompe 54 coopère également avec le moyen d'aspiration 36 pour créer une dépression dans le conduit de puisage 28.

De plus, une seconde vanne 56 coopère avec le tuyau de rinçage 30 pour permettre le réglage, ou l'arrêt, du débit de fluide à travers le tuyau de rinçage 30.

Plus particulièrement, l'embout 18 de puisage comporte une lance de rinçage 58 qui est reliée sur la première extrémité 50 du tuyau de rinçage 30.

La lance de rinçage 58 est équipée d'une tête formant buse de rinçage 60 qui est adaptée pour projeter de l'eau sur toutes les parois du bidon 16, de façon à rincer efficacement le bidon 16.

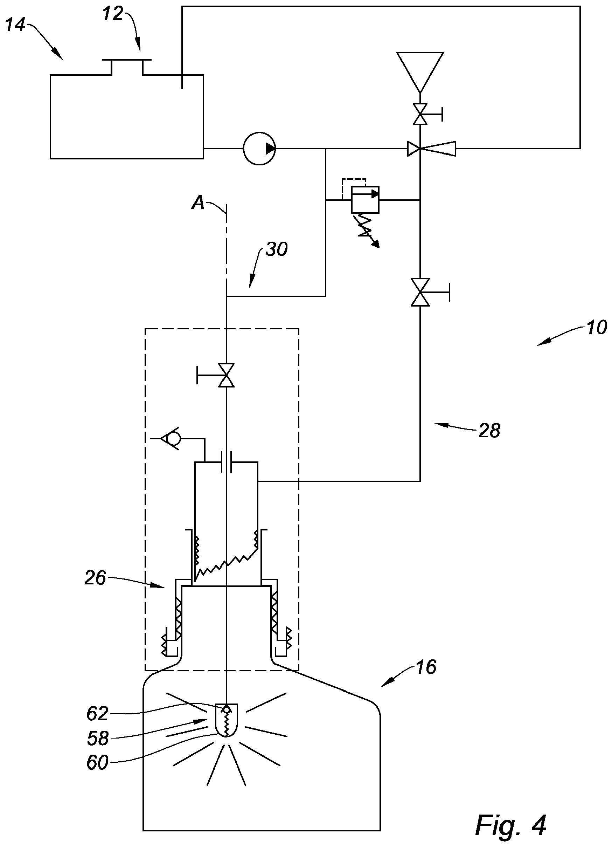

La lance de rinçage 58 est montée coulissante sur le perforateur principal 42, suivant l'axe A de puisage, entre une position haute de repos représentée à la figure 1, dans laquelle la lance de rinçage 58 est escamotée dans l'embout 18, et une position basse de rinçage, représentée à la figure 4, dans laquelle la lance de rinçage 58 est déployée à l'intérieur du bidon 16.

De plus, la lance de rinçage 58 est montée libre en rotation autour de l'axe A de puisage pour rincer les parois internes latérales du bidon 16.

Aussi, la lance de rinçage 58 est équipée d'un clapet anti retour 62 qui empêche le produit contenu dans le bidon 16 de remonter par le tuyau de rinçage 30.

Selon un autre aspect de l'invention, en référence à la figure 1, le manchon principal 26 présente une extrémité libre inférieure équipée d'une gouttière 64 anti-goutte annulaire qui s'étend autour de l'axe A de puisage et qui est conçue pour récupérer les gouttes de ruissellement provenant de l'embout 18 de puisage.

Ainsi, lorsque le manchon principal 26 est dévissé du bidon 16, les résidus de produits qui ruissellent depuis le manchon sont retenus dans la gouttière 64.

De façon complémentaire, le dispositif 10 comporte un bouchon de rinçage 66 qui est adapté pour être vissé sur le manchon principal 26 de façon étanche pour permettre le rinçage de l'intérieur de l'embout 18 de puisage par la lance de rinçage 58 par exemple, et pour empêcher le ruissellement de produit.

Selon un exemple préféré de réalisation représenté à la figure 5, le dispositif 10 comporte un manchon secondaire 68 qui présente un premier filetage 70 adapté pour coopérer avec le taraudage 27 du manchon principal 26 de l'embout 18 de puisage et un taraudage 72 adapté pour coopérer avec le goulot d'un bidon secondaire (non représenté) présentant un diamètre différent du bidon 16 décrit précédemment.

De plus, le manchon secondaire 68 présente un second filetage 74 adapté pour coopérer avec un bouchon de fermeture (non représenté) prévu pour éviter d'éventuels écoulements résiduels.

En complément, le manchon secondaire 68 est associé à un perforateur secondaire 76 qui présente une forme globalement cylindrique suivant l'axe A de puisage et qui est adapté pour être monté sur le perforateur principal 42.

Le perforateur secondaire 76 est conçu pour percer l'opercule du bidon secondaire.

Le dispositif 10 selon l'invention permet de transférer le produit contenu dans le bidon 16 vers la cuve 12, sans risque de fuite du produit ou de contact du produit avec l'opérateur.

Un exemple d'utilisation du dispositif 10 est décrit ci-dessous de façon chronologique.

Le moyen d'aspiration 36 est actionné pour créer une dépression dans le tuyau de puisage 28.

Après avoir dévissé le bouchon 78 du bidon 16, l'opérateur visse le manchon principal 26 sur le bidon 16, au dessus de l'opercule 44, comme on peut le voir à la figure 2.

En référence à la figure 3, l'opérateur entraîne en coulissement le perforateur principal 42 vers sa position de perçage pour percer l'opercule 44.

L'opérateur pilote la première vanne 38 pour régler le débit d'aspiration du tuyau de puisage 28.

Le dispositif 10 aspire l'air passant par le clapet anti-retour 41 formant évent prévu à cet effet.

L'opérateur incline le bidon 16 de sorte que le produit contenu dans le bidon 16 soit aspiré par le dispositif 10.

L'inclinaison du bidon 16 peut être réalisée manuellement ou au moyen d'un dispositif de levage qui peut être aménagé sur le pulvérisateur pour faciliter cette opération.

Une fois le bidon 16 vidé entièrement, l'opérateur pilote la seconde vanne 56 pour alimenter la lance de rinçage 58 en eau de rinçage et entraîne la lance de rinçage 58 en translation et/ou en rotation à l'intérieur du bidon 16 pour rincer les parois internes du bidon 16, comme on peut le voir à la figure 4.

L'eau de rinçage est aspirée simultanément par le moyen d'aspiration 36.

Une fois le bidon 16 vidé et rincé, l'opérateur peut obturer le clapet anti-retour 41 pour créer une forte dépression dans le bidon 16, afin de compresser le bidon 16 dans le but d'en réduire le volume de déchet.

Ensuite, l'opérateur dévisse le manchon principal 26 du bidon 16.

Dans le cas d'une vidange partielle du bidon 16, l'opérateur peut arrêter l'aspiration à tout moment en pilotant la première vanne 38.

L'opérateur peut alors dévisser le manchon principal 26 du bidon 16 puis visse le bouchon de rinçage 66 sur le manchon 26 afin de pouvoir rincer l'intérieur de l'embout 18 de puisage.

Pour éviter à l'opérateur de porter et d'incliner le bidon 16 au cours de l'étape s'aspiration du liquide, le dispositif selon l'invention peut être équipé d'un dispositif de levage (non représenté).

Le dispositif de levage comporte par exemple un berceau qui est conçu pour porter le bidon 16 et qui est monté pivotant autour d'un axe de pivotement perpendiculaire à l'axe A de puisage, entre une position initiale de chargement dans laquelle le bidon peut être chargé sur le berceau sans effort et l'opérateur peut visser le manchon principal 26 sur le bidon 16, et une position d'aspiration dans laquelle le chariot est pivoté d'un demi tour autour de son axe de pivotement, pour permettre l'aspiration du produit contenu dans le bidon 16 par le dispositif 10.

Selon une autre variante de réalisation de l'invention, de l'air comprimé provenant d'une source d'air comprimé 80 est injecté dans le bidon 16 pour pousser le produit contenu dans le bidon 16 vers le tuyau de puisage 28, au lieu d'aspiré le produit par le moyen d'aspiration 36.

A cet effet, le bidon 16 est retourné le goulot 20 vers le bas.

L'air peut être injecté par le clapet anti-retour 41 à travers l'embout 18 de puisage.

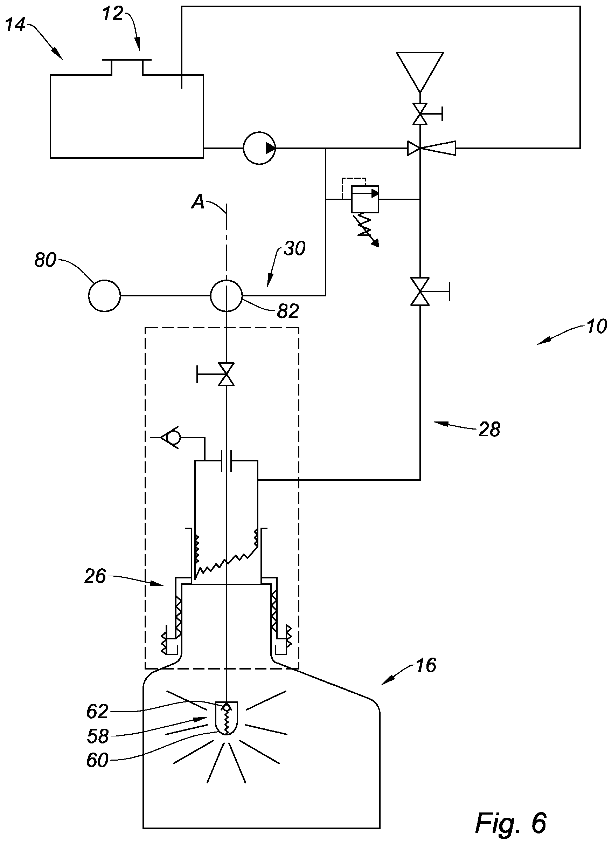

Selon une variante de réalisation préférée représentée à la figure 6, l'air est injecté dans le bidon 16 par la lance de rinçage 58 dont la buse 60 est insérée dans le bidon 16, au-delà du goulot 20.

L'injection d'air à l'intérieur du bidon 16 par la buse 60 favorise l'écoulement du produit qui n'est pas gêné par l'entrée d'air à travers le goulot 20.

La lance de rinçage 58 est alimentée en air comprimé par la source d'air comprimé 80 qui est reliée sur le tuyau de rinçage 30 par une vanne trois voies 82 agencée en amont de la vanne 56.

La source d'air comprimé 80 peut provenir d'un pulvérisateur auxiliaire rempli d'air sous pression, ou d'une pompe à main ou encore d'une bombonne d'air comprimée équipant le pulvérisateur 14.

Aussi, l'air injecté dans le bidon 16 peut provenir d'un réservoir d'air intermédiaire, dont l'air serait poussé par la pompe d'injection 54 d'eau de rinçage via une dérivation du tuyau de rinçage 30 et une vanne 56 à 3 voies en aval dudit réservoir d'air.

Dans tous les cas, la pression de l'air injecté dans le bidon 16 est limitée à une valeur maximale pour ne pas détériorer le bidon 16.

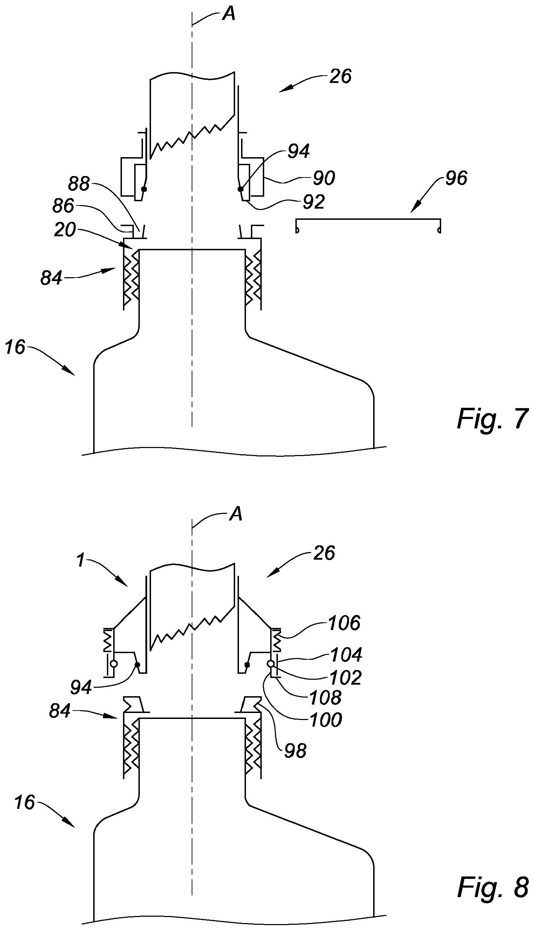

Selon une autre variante de réalisation représentée à la figure 7, le dispositif 10 comporte un manchon principal 26 à fixation rapide du type quart de tour.

Selon cette variante, le bidon 16 est équipé d'un bouchon 84 adapté qui est vissé sur le goulot 20 et qui délimite une empreinte femelle 86 du type quart de tour et une gorge 88 annulaire supérieure.

La gorge 88 annulaire s'étend autour de l'axe A de puisage et présente une section radiale tronconique.

De façon complémentaire, le manchon principal 26 délimite une empreinte mâle 90 du type quart de tour qui est adaptée pour coopérer avec l'empreinte femelle 86 associée du bouchon 84.

De plus, le manchon principal 26 comporte une couronne 92 de forme complémentaire à la forme de la gorge 88 et un joint 94 élastomère pour assurer l'étanchéité entre le manchon principal 26 et le goulot 20 du bidon 16.

Aussi, le goulot 20 du bidon est fermé par un opercule 44 du type scellé ou par un disque d'étanchéité maintenu par compression.

En outre, un bouchon de protection mécanique 96 est prévu pour être emboîté sur le bouchon 84 afin de protéger l'opercule 44 ou le disque d'étanchéité.

On a représenté à la figure 8 une variante similaire à la variante illustrée à la figure 7 et décrite précédemment, selon laquelle la fixation du manchon principal 26 sur le bouchon 84 spécifique du bidon 16 est réalisé par pression suivant l'axe A de puisage.

A cet effet, le bouchon 84 délimite une gorge 98 annulaire périphérique autour de l'axe A de puisage.

Complémentairement, le manchon principal 26 comporte une cage 100 annulaire qui renferme des billes 102 qui sont agencées de façon à coopérer avec la gorge 98 du bouchon 84.

Les billes 102 sont bloquées radialement par une bague 104 annulaire agencée à la périphérie de la cage 100.

De plus, un ressort 106 rappelle élastiquement la bague 104 vers le bas en butée sur un siège 108 délimité par le manchon principal 26.

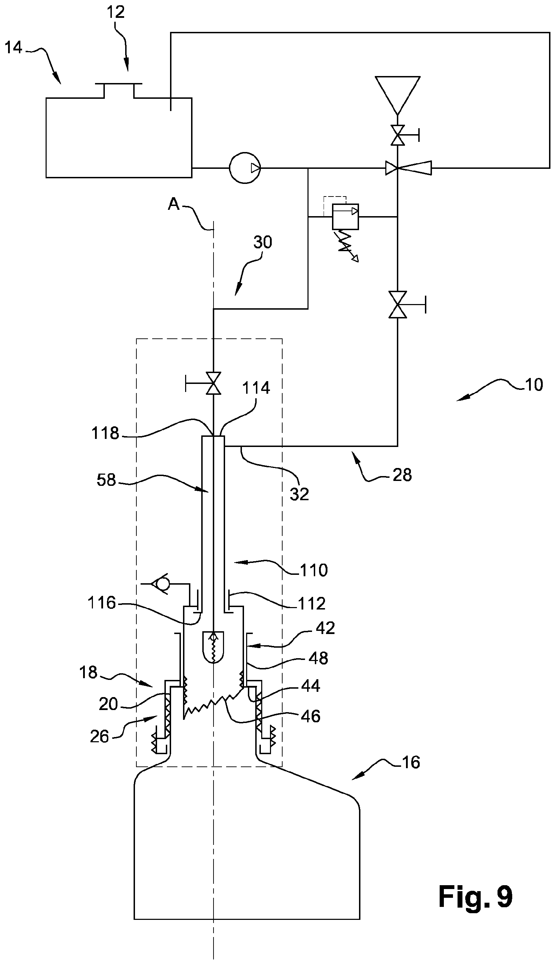

Selon une variante de réalisation représentée aux figures 9 à 11, le puisage du liquide contenu dans le bidon 16 n'est plus réalisé directement à travers l'embout 18 de puisage mais au moyen d'une canne de puisage.

Selon cette variante, le dispositif 10 comporte une canne 110 de puisage qui s'étend axialement suivant l'axe A de puisage à travers un trou 112 de passage délimité par une face supérieure de l'embout 18 de puisage.

La canne 110 de puisage s'étend depuis une première extrémité 114 supérieure qui est reliée sur le tuyau de puisage 28, jusqu'à une extrémité libre 116 inférieure débouchante de puisage.

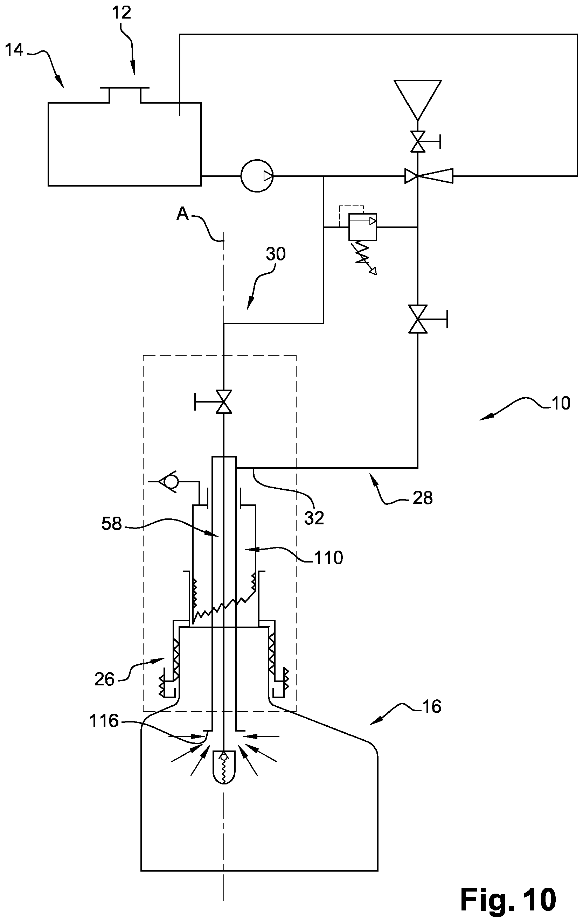

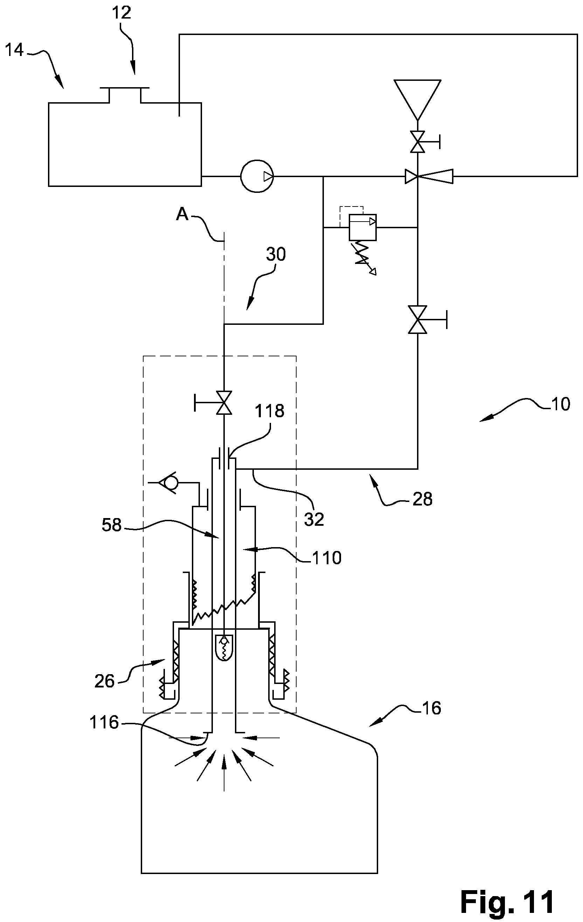

De plus, la canne 110 de puisage est montée coulissante axialement suivant l'axe A de puisage par rapport à l'embout 18 de puisage, à travers le trou 112 de passage associé, entre une position escamotée représentée à la figure 9 et une position de puisage représentée aux figures 10 et 11 dans laquelle l'extrémité libre de la canne 110 de puisage est descendue sensiblement jusqu'au fond du bidon 16 pour aspirer le liquide contenu dans le bidon 16.

Aussi, la lance de rinçage 58 décrite précédemment s'étend à travers un trou 118 de passage qui est délimité par la première extrémité 114 supérieure de la canne 110 de puisage.

Selon un exemple de réalisation préféré, la canne 110 de puisage et la lance de rinçage 58 sont solidaires entre elles en mouvement.

Toutefois, à titre non limitatif, la canne 110 de puisage et la lance de rinçage 58 peuvent être montées coulissantes l'une par rapport à l'autre de façon indépendante, comme l'illustre la figure 11.

Cette variante de réalisation comprenant la canne 110 de puisage permet de puiser une majeure partie du liquide contenu dans le bidon 16 sans avoir à le retourner. Cette fonctionnalité permet de doser plus facilement le volume de liquide restant dans le bidon 16 et donc également le volume de liquide soutiré.

Pour une vidange totale du bidon 16, après avoir soutiré le volume maximum de liquide grâce à la canne de puisage 110, il est possible de retourner le bidon 16 et d'agencer la canne de puisage 110 dans sa position escamotée au fond de l'embout de puisage 18 avant d'aspirer le liquide restant à travers la canne 110 de puisage.

La présente description de l'invention est donnée à titre d'exemple non limitatif.

## Revendications

1. Dispositif (10) pour transférer un liquide depuis un bidon (16) jusqu'à une cuve (12) de façon étanche, le dispositif (10) comportant :
- un embout (18) de puisage de forme globalement cylindrique qui s'étend axialement suivant un axe (A) de puisage depuis une première extrémité (22), jusqu'à une seconde extrémité (24) équipée d'au moins un manchon principal (26), ledit manchon étant conçu pour être raccordé sur le goulot (20) du bidon (16) de façon étanche,
- un tuyau de puisage (28) qui présente une première extrémité (32) reliée sur l'embout (18) de puisage et une seconde extrémité (34) adaptée pour être reliée sur la cuve (12) afin de permettre le puisage du liquide depuis le bidon (16) jusqu'à la cuve (12), et
- un tuyau de rinçage (30) qui présente une première extrémité (50) reliée sur l'embout (18) de puisage et une seconde extrémité (52) adaptée pour être reliée sur une source d'un fluide de rinçage, pour injecter ledit fluide de rinçage dans le bidon (16),
**caractérisé en ce que** l'embout (18) de puisage comporte une lance de rinçage (58) qui est reliée sur la première extrémité (50) du tuyau de rinçage (30) et qui est montée coulissante axialement suivant l'axe (A) de puisage, entre une position de repos dans laquelle la lance de rinçage (58) est escamotée dans l'embout (18) de puisage et une position de rinçage dans laquelle la lance de rinçage (58) est déployée pour rincer les parois internes du bidon (16).

2. Dispositif (10) selon la revendication 1, **caractérisé en ce que** la lance de rinçage (58) est montée libre en rotation autour de l'axe (A) de puisage pour rincer les parois internes du bidon (16).

3. Dispositif (10) selon l'une quelconque des revendications précédentes, **caractérisé en ce que** le manchon principal (26) présente une extrémité libre équipée d'une gouttière (64) anti-goutte annulaire qui s'étend autour de l'axe (A) de puisage et qui est conçue pour récupérer les gouttes de ruissellement provenant de l'embout (18) de puisage.

4. Dispositif (10) selon l'une quelconque des revendications précédentes, **caractérisé en ce qu'**il comporte un bouchon de rinçage (66) qui est adapté pour être monté sur le manchon principal (26) de façon étanche pour permettre le rinçage de l'embout (18) de puisage.

5. Dispositif (10) selon l'une quelconque des revendications précédentes, **caractérisé en ce qu'**il comprend un moyen d'aspiration (36) qui coopère avec le tuyau de puisage (28) pour permettre le puisage du liquide depuis le bidon (16) jusqu'à la cuve (12).

6. Dispositif (10) selon l'une quelconque des revendications précédentes, **caractérisé en ce que** la lance de rinçage (58) est adaptée pour injecter de l'air directement à l'intérieur du bidon (16), au-delà du goulot (20) du bidon (16).

7. Dispositif (10) selon l'une quelconque des revendications précédentes, **caractérisé en ce que** l'embout (18) de puisage comporte un clapet anti-retour (41) formant évent.

8. Dispositif (10) selon l'une quelconque des revendications précédentes, **caractérisé en ce que** l'embout (18) de puisage est équipé d'un perforateur principal (42) qui présente une forme globalement cylindrique suivant l'axe (A) de puisage et qui est adapté pour percer un opercule (44) obturant le goulot (20) du bidon (16).

9. Dispositif (10) selon la revendication 8, **caractérisé en ce que** le perforateur principal (42) présente une extrémité libre (46) perforante, ledit perforateur (42) étant monté coulissant axialement suivant l'axe (A) de puisage, entre une position escamotée et une position de perçage dans laquelle ladite extrémité libre perforante permet le perçage de l'opercule (44) dudit goulot (20).

10. Dispositif (10) selon l'une quelconque des revendications précédentes, **caractérisé en ce qu'**il comporte au moins un manchon secondaire (68) qui est conçu pour être monté sur l'embout (18) de puisage et pour être raccordé sur le goulot (20) d'un bidon secondaire de façon étanche.

11. Dispositif (10) selon les revendications 10 et 8, **caractérisé en ce que** le manchon secondaire (68) est associé à un perforateur secondaire (76) qui présente une forme globalement cylindrique suivant l'axe (A) de puisage et qui est adapté pour être monté sur le perforateur principal (42).

12. Dispositif (10) selon l'une quelconque des revendications précédentes, **caractérisé en ce qu'**il comporte une canne (110) de puisage qui s'étend axialement suivant l'axe (A) de puisage à travers un trou (112) de passage délimité par l'embout (18) de puisage, depuis une première extrémité (114) reliée sur le tuyau de puisage (28), jusqu'à une seconde extrémité libre (116) de puisage, la canne (110) de puisage étant montée coulissante axialement suivant l'axe (A) de puisage par rapport à l'embout (18) de puisage entre une position escamotée et une position de puisage dans laquelle l'extrémité libre de la canne (110) de puisage est déployée pour aspirer le liquide dans le bidon (16).

## Patentansprüche

1. Vorrichtung (10) zum Übertragen einer Flüssigkeit aus einem Kanister (16) bis zu einem Tank (12) in dichter Form, wobei die Vorrichtung (10) umfasst:
- einen Entnahmestutzen (18) in einer im Allgemeinen zylindrischen Form, der sich axial entlang einer Entnahmeachse (A) aus einem ersten Ende (22) bis zu einem zweiten Ende (24) erstreckt, das mit zumindest einer Hauptmuffe (26) bestückt ist, wobei die besagte Muffe gestaltet ist, um in dichter Form an den Hals (20) des Kanisters (16) angeschlossen zu werden,
- ein Entnahmerohr (28), das ein erstes Ende (32) aufweist, das mit dem Entnahmestutzen (18) verbunden ist, und ein zweites Ende (34), das ausgeführt ist, um mit dem Tank (12) verbunden zu werden, um die Entnahme der Flüssigkeit aus dem Kanister (16) bis zum Tank (12) zu ermöglichen, und
- ein Spülrohr (30), das ein erstes Ende (50) aufweist, das mit dem Entnahmestutzen (18) verbunden ist und ein zweites Ende (52), das ausgeführt ist, um mit einer Quelle einer Spülflüssigkeit verbunden zu werden, um die besagte Spülflüssigkeit in den Kanister (16) zu injizieren,
**dadurch gekennzeichnet, dass** der Entnahmestutzen (18) eine Spüllanze (58) umfasst, die mit dem ersten Ende (50) des Spülrohres (30) verbunden ist, und die axial entlang der Entnahmeachse (A) zwischen einer Ruheposition, in der die Spüllanze (58) in den Entnahmestutzen (18) eingefahren ist, und einer Spülposition gleitend montiert ist, in der die Spüllanze (58) ausgefahren ist, um die Innenwände des Kanisters (16) zu spülen.

2. Vorrichtung (10) nach Anspruch 1, **dadurch gekennzeichnet, dass** die Spüllanze (58) frei um die Entnahmeachse (A) drehbar montiert ist, um die Innenwände des Kanisters (16) zu spülen.

3. Vorrichtung (10) nach irgendeinem der vorhergehenden Ansprüche, **dadurch gekennzeichnet, dass** die Hauptmuffe (26) ein freies Ende aufweist, das mit einer ringförmigen Tropfstopp-Rinne (64) ausgestattet ist, die sich um die Entnahmeachse (A) erstreckt und die gestaltet ist, um die Rieseltropfen aufzufangen, die aus dem Entnahmestutzen (18) stammen.

4. Vorrichtung (10) nach irgendeinem der vorhergehenden Ansprüche, **dadurch gekennzeichnet, dass** sie einen Spülstopfen (66) umfasst, der ausgeführt ist, um in dichter Form auf der Hauptmuffe (26) montiert zu werden, um das Spülen des Entnahmestutzens (18) zu ermöglichen.

5. Vorrichtung (10) nach irgendeinem der vorhergehenden Ansprüche, **dadurch gekennzeichnet, dass** sie ein Saugmittel (36) umfasst, das mit dem Entnahmerohr (28) zusammenwirkt, um die Entnahme der Flüssigkeit aus dem Kanister (16) bis zum Tank (12) zu ermöglichen.

6. Vorrichtung (10) nach irgendeinem der vorhergehenden Ansprüche, **dadurch gekennzeichnet, dass** die Spüllanze (58) ausgeführt ist, um Luft direkt ins Innere des Kanisters (16) über den Hals (20) des Kanisters (16) hinaus zu injizieren.

7. Vorrichtung (10) nach irgendeinem der vorhergehenden Ansprüche, **dadurch gekennzeichnet, dass** der Entnahmestutzen (18) ein Rückschlagventil (41) umfasst, das eine Entlüftung bildet.

8. Vorrichtung (10) nach irgendeinem der vorhergehenden Ansprüche, **dadurch gekennzeichnet, dass** der Entnahmestutzen (18) mit einem Hauptperforator (42) bestückt ist, der eine im Allgemeinen zylindrische Form entlang der Entnahmeachse (A) aufweist, und der ausgeführt ist, um einen Deckel (44) anzubohren, der den Hals (20) des Kanisters (16) verschließt.

9. Vorrichtung (10) nach Anspruch 8, **dadurch gekennzeichnet, dass** der Hauptperforator (42) ein freies perforierendes Ende (46) aufweist, wobei der besagte Perforator (42) axial entlang der Entnahmeachse (A) zwischen einer eingefahrenen Position und einer Bohrposition gleitend montiert ist, in der das besagte freie perforierende Ende das Anbohren des Deckels (44) des besagten Halses (20) ermöglicht.

10. Vorrichtung (10) nach irgendeinem der vorhergehenden Ansprüche, **dadurch gekennzeichnet, dass** sie zumindest eine Sekundärmuffe (68) umfasst, die gestaltet ist, um auf dem Entnahmestutzen (18) montiert zu werden, und um in dichter Form am Hals (20) eines Sekundärkanisters angeschlossen zu werden.

11. Vorrichtung (10) nach den Ansprüchen 10 und 8, **dadurch gekennzeichnet, dass** die Sekundärmuffe (68) einem Sekundärperforator (76) zugeordnet ist, der eine im Allgemeinen zylindrische Form entlang der Entnahmeachse (A) aufweist und der ausgeführt ist, um auf dem Hauptperforator (42) montiert zu werden.

12. Vorrichtung (10) nach irgendeinem der vorhergehenden Ansprüche, **dadurch gekennzeichnet, dass** sie einen Entnahmestock (110) umfasst, das sich axial entlang der Entnahmeachse (A) durch ein Durchgangsloch (112) hindurch, das durch den Entnahmestutzen (18) eingegrenzt wird, von einem ersten Ende (114), das mit dem Entnahmerohr (28) verbunden ist, bis zu einem zweiten freien Entnahmeende (116) erstreckt, wobei der Entnahmestock (110) axial entlang der Entnahmeachse (A) im Verhältnis zum Entnahmestutzen (18) zwischen einer eingefahrenen Position und einer Entnahmeposition gleitend montiert ist, in der das freie Ende des Entnahmestocks (110) ausgefahren ist, um die Flüssigkeit im Kanister (16) abzusaugen.

## Claims

1. A device (10) for sealingly transferring a liquid from a canister (16) to a tank (12), the device (10) including:
- a generally cylindrical-shaped drawing nozzle (18) which extends axially along a drawing axis (A) from a first end (22), to a second end (24) equipped with at least one main sleeve (26), said sleeve being designed to be sealingly connected on the neck (20) of the canister (16),
- a drawing pipe (28) which has a first end (32) linked on the drawing nozzle (18) and a second end (34) adapted to be linked on the tank (12) in order to allow the drawing of the liquid from the canister (16) to the tank (12), and
- a rinsing pipe (30) which has a first end (50) linked on the drawing nozzle (18) and a second end (52) adapted to be linked on a source of a rinsing fluid, to inject said rinsing fluid into the canister (16),
**characterized in that** the drawing nozzle (18) includes a rinsing lance (58) which is linked on the first end (50) of the rinsing pipe (30) and which is mounted so as to slide axially along the drawing axis (A), between a rest position in which the rinsing lance (58) is retracted into the drawing nozzle (18) and a rinsing position in which the rinsing lance (58) is deployed to rinse the inner walls of the canister (16).

2. The device (10) according to claim 1, **characterized in that** the rinsing lance (58) is mounted in free rotation about the drawing axis (A) to rinse the inner walls of the canister (16).

3. The device (10) according to any one of the preceding claims, **characterized in that** the main sleeve (26) has a free end equipped with an annular anti-drip gutter (64) which extends about the drawing axis (A) and which is designed to recover the run-off drops coming from the drawing nozzle (18).

4. The device (10) according to any one of the preceding claims, **characterized in that** it includes a rinsing plug (66) which is adapted to be sealingly mounted on the main sleeve (26) to allow the rinsing of the drawing nozzle (18).

5. The device (10) according to any one of the preceding claims, **characterized in that** it comprises a suction means (36) which cooperates with the drawing pipe (28) to allow the drawing of the liquid from the canister (16) to the tank (12).

6. The device (10) according to any one of the preceding claims, **characterized in that** the rinsing lance (58) is adapted to inject air directly inside the canister (16), beyond the neck (20) of the canister (16).

7. The device (10) according to any one of the preceding claims, **characterized in that** the drawing nozzle (18) includes a check valve (41) forming a vent.

8. The device (10) according to any one of the preceding claims, **characterized in that** the drawing nozzle (18) is equipped with a main perforator (42) which has a generally cylindrical shape along the drawing axis (A) and which is adapted to pierce an inner seal (44) obturating the neck (20) of the canister (16).

9. The device (10) according to claim 8, **characterized in that** the main perforator (42) has a perforating free end (46), said perforator (42) being mounted so as to slide axially along the drawing axis (A) between a retracted position and a piercing position in which said free perforating end allows the piercing of the inner seal (44) of said neck (20).

10. The device (10) according to any one of the preceding claims, **characterized in that** it includes at least one secondary sleeve (68) which is designed to be mounted on the drawing nozzle (18) and to be sealingly connected on the neck (20) of a secondary canister.

11. The device (10) according to claims 10 and 8, **characterized in that** the secondary sleeve (68) is associated with a secondary perforator (76) which has a generally cylindrical shape along the drawing axis (A) and which is adapted to be mounted on the main perforator (42).

12. The device (10) according to any one of the preceding claims, **characterized in that** it includes a drawing stick (110) which extends axially along the drawing axis (A) through a through-hole (112) delimited by the drawing nozzle (18) from a first end (114) linked on the drawing pipe (28), up to a second free drawing end (116), the drawing stick (110) being mounted so as to slide axially along the drawing axis (A) relative to the drawing nozzle (18) between a retracted position and a drawing position in which the free end of the drawing stick (110) is deployed to suck the liquid in the canister (16).
